(19) **Europäisches Patentamt**
**European Patent Office**
**Office européen des brevets**

(11) **EP 4 206 265 A1**

(12) **EUROPEAN PATENT APPLICATION**
published in accordance with Art. 153(4) EPC

(43) Date of publication:
**05.07.2023  Bulletin 2023/27**

(21) Application number: **21862008.6**

(22) Date of filing: **24.08.2021**

(51) International Patent Classification (IPC):
*C08J 9/16* [(2006.01)]     *C08J 9/00* [(2006.01)]
*C08J 9/224* [(2006.01)]     *C08K 3/04* [(2006.01)]
*C08L 23/00* [(2006.01)]

(52) Cooperative Patent Classification (CPC):
**C08J 9/00; C08J 9/16; C08J 9/224; C08K 3/04;
C08L 23/00**

(86) International application number:
**PCT/KR2021/011238**

(87) International publication number:
**WO 2022/045711 (03.03.2022 Gazette 2022/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.08.2020  KR 20200109233
06.08.2021  KR 20210103921**

(71) Applicant: **Lotte Chemical Corporation
Seoul, 05551 (KR)**

(72) Inventors:
• **JANG, Jun Hyeok
Uiwang-Si Gyeonggi-do 16073 (KR)**
• **KWON, Yong Jin
Uiwang-Si Gyeonggi-do 16073 (KR)**
• **LIM, Sung Hwan
Uiwang-Si Gyeonggi-do 16073 (KR)**

(74) Representative: **Germain Maureau
12, rue Boileau
69006 Lyon (FR)**

(54) **POLYOLEFIN-BASED EXPANDED PARTICLES AND MOLDED PRODUCT MANUFACTURED THEREFROM**

(57)    Polyolefin-based expanded particles of the present invention are expanded particles of a polyolefin resin composition comprising: about 100 parts by weight of polyolefin resin; about 2.2-3.8 parts by weight of carbon nanotubes; and about 4-11 parts by weight of carbon black having a surface area of about 700-1,100 $m^2$/g and a DBP oil absorption of about 350-450 $cm^3$/100 g, wherein the expansion ratio is about 10:1 to about 40:1, and the mean particle diameter of expanded cells is about 30-400 $\mu$m. The polyolefin-based expanded particles have excellent conductivity, fusion, and the like.

EP 4 206 265 A1

**Description**

[Technical Field]

The present invention relates to polyolefin-based expanded particles and a molded product produced therefrom. More particularly, the present invention relates to polyolefin-based expanded particles that exhibit good electrical conductivity, fusibility, and the like, and a molded product produced therefrom.

[Background Art]

Typically, polystyrene resins, polyurethane resins, polyolefin resins, and the like are used as synthetic resin materials for foamed products. Among these materials, the polyolefin resins are widely used due to eco-friendliness and recyclability thereof, and expansion of the polyolefin resins has been continuously developed. Moreover, since polyolefin-based expanded products have excellent properties in terms of chemical resistance, heat resistance, compressive strength, and the like, the polyolefin-based expanded products are widely used as packaging materials, building materials, materials for automobile parts, and the like.

However, since most polyolefin resins are polymer materials having nonpolarity, the polyolefin resins have a disadvantageous problem in that a molded product produced therefrom can be easily charged to generate static electricity or can charge other materials to generate static electricity through friction between the molded products or between the molded product and the other materials, or through external electric force around the molded products. Since this charging phenomenon can cause damage to and contamination of the molded products, there is a need to impart conductive performance through electrical conductivity.

In order to impart electrical conductivity to expanded particles, a method of applying nonionic surfactants and electrically conductive fillers has been developed. However, this method can provide insufficient electrical conductivity due to surface resistance deviation between measurement sites or can cause deterioration in fusibility during a molding process.

Therefore, there is a need for development of polyolefin-based expanded particles and a molded product that have good properties in terms of electrical conductivity, fusibility, and the like.

The background technique of the present invention is disclosed in Japanese Unexamined Patent Publication No. 10-2005-256007, Korean Patent Laid-open Publication No. 10-2009-0086336, and the like.

[Disclosure]

[Technical Problem]

It is one object of the present invention to provide polyolefin-based expanded particles that exhibit good properties in terms of electrical conductivity, fusibility, and the like, and a method of preparing the same.

It is another object of the present invention to provide a molded product formed of the polyolefin-based expanded particles.

The above and other objects of the present invention can be achieved by the present invention described below.

[Technical Solution]

1. One aspect of the present invention relates to polyolefin-based expanded particles. The polyolefin-based expanded particles are expanded particles of a polyolefin resin composition comprising: about 100 parts by weight of a polyolefin resin; about 2.2 parts by weight to about 3.8 parts by weight of carbon nanotubes; and about 4 parts by weight to about 11 parts by weight of carbon black having a surface area of about 700 $m^2$/g to about 1,100 $m^2$/g and a DBP oil absorption amount of about 350 $cm^3$/100 g to about 450 $cm^3$/100 g, wherein the expanded particles have an expansion ratio of about 10 times to about 40 times and expanded cells of the expanded particles have an average particle diameter of about 30 $\mu$m to about 400 $\mu$m.

2. In embodiment 1, the carbon nanotubes and the carbon black may be present in a weight ratio of about 1:1.5 to about 1:5.

3. In embodiment 1 or 2, the polyolefin resin may comprise at least one of polypropylene; a random copolymer obtained by polymerizing at least two monomers of propylene, ethylene, butylene and octene; a block copolymer in which polypropylene is blended with ethylene-propylene rubbers; polyethylene; an ethylene-vinyl acetate copolymer; and a copolymer of $\alpha$-olefins.

4. In embodiments 1 to 3, the carbon nanotubes may have an average diameter of about 3 nm to about 15 nm, an average length of about 10 μm to about 25 μm, and a surface area of about 150 m$^2$/g to about 300 m$^2$/g.

5. Another aspect of the present invention relates to a method of preparing polyolefin-based expanded particles. The method comprises: mixing about 100 parts by weight of a polyolefin resin composition comprising a polyolefin resin, carbon nanotubes, and carbon black having a surface area of about 700 m$^2$/g to about 1,100 m$^2$/g and a DBP oil absorption amount of about 350 cm$^3$/100 g to about 450 cm$^3$/100 g with about 200 parts by weight to about 400 parts by weight of a dispersion medium comprising water and a dispersant to prepare a mixture; and adding a blowing agent to the mixture, followed by expanding the mixture such that the expanded particles have an expansion ratio of about 10 times to about 40 times and expanded cells of the expanded particles have an average particle diameter of about 30 μm to about 400 μm.

6. In embodiment 5, the dispersant may comprise at least one of higher fatty acids, higher fatty acid esters, and higher fatty acid amides.

7. In embodiment 5 or 6, expansion of the mixture may be performed by heating and compressing the mixture containing the blowing agent to a temperature of about 130°C to about 160°C under a pressure of about 20 kgf/cm$^2$ to about 50 kgf/cm$^2$, followed by exposing the mixture to room temperature and atmospheric pressure.

8. A further aspect of the present invention relates to a molded product. The molded product is formed of the polyolefin-based expanded particles.

9. In embodiment 8, the molded product may be formed by filling a mold with the polyolefin-based expanded particles, followed by bonding the expanded particles to one another through fusion.

10. In embodiment 8 or 9, the molded product may have a surface resistance value of about 10 S2/sq to about 10$^{3.1}$ Ω/sq, as measured by a surface resistance tester (SIMCO, ST-4).

11. In embodiments 8 to 10, the molded product may have a surface resistance deviation of about 10$^{0.5}$ Ω/sq or less, as calculated by Equation 1:

$$[\text{Equation 1}]$$

$$\text{Surface resistance deviation} = \mid \text{surface resistance}_{(1,\ 2,\ 3,\ 4\ or\ 5)} - \text{average}$$

$$\text{surface resistance} \mid$$

where surface resistance $_{(1, 2, 3, 4 or 5)}$ is one of five surface resistance values measured in 5 different regions on the molded product by a surface resistance tester (SIMCO, ST-4) and the average surface resistance is an average of the five surface resistance values.

[Advantageous Effects]

The present invention provides polyolefin-based expanded particles that exhibit good properties in terms of electrical conductivity, fusibility, and the like, a method of preparing the same, and a molded product produced therefrom.

[Best Mode]

Hereinafter, embodiments of the present invention will be described in detail.

Polyolefin-based expanded particles according to the present invention are expanded particles of a polyolefin resin composition comprising: (A) a polyolefin resin; (B) carbon nanotubes; and (C) carbon black.

As used herein to represent a specific numerical range, the expression "a to b" means "≥ a and ≤ b".

(A) Polyolefin resin

According to one embodiment of the invention, the polyolefin resin is a base resin, which forms expanded particles, and may be polyolefin resins applicable to typical polyolefin-based expanded particles.

In some embodiments, the polyolefin resin may comprise polypropylene; a random copolymer obtained by polymerizing at least two monomers of propylene, ethylene, butylene and octene; a block copolymer in which polypropylene is blended with ethylene-propylene rubbers; polyethylene; an ethylene-vinyl acetate copolymer; a copolymer of α-olefins; and combinations thereof.

In some embodiments, the polyolefin resin may have a melt-flow index of about 1 g/10 min to about 50 g/10 min, for example, about 5 g/10 min to about 30 g/10 min, as measured at 230°C under a load of 2.16 kg in accordance with ASTM D1238. Within this range, the expanded particles (molded product) can have good properties in terms of mechanical strength, molding processability, and the like.

(B) Carbon nanotubes

According to one embodiment of the invention, the carbon nanotubes are used together with particular carbon black according to the present invention to improve electrical conductivity, fusibility and the like of the polyolefin-based expanded particles through formation of a uniform electrical path even with a small amount thereof. For example, the carbon nanotubes may comprise single-walled carbon nanotubes, double-walled carbon nanotubes, multi-walled carbon nanotubes, bundle type carbon nanotubes, and the like.

In some embodiments, the carbon nanotubes may have an average diameter of about 3 nm to about 15 nm, for example, 5 nm to 13 nm, as measured by a transmission electron microscope (TEM), an average length of about 10 $\mu$m to about 25 $\mu$m, for example, about 12 $\mu$m to about 20 $\mu$m, as measured by a scanning electron microscope, and a surface area (nitrogen surface area) of about 150 $m^2$/g to about 300 $m^2$/g, for example, about 180 $m^2$/g to about 290 $m^2$/g, as measured in accordance with ASTM D6556. Within this range, the expanded particles (molded product) can exhibit good properties in terms of electrical conductivity, fusibility and the like, and have a small surface resistance deviation to secure uniform electrical conductivity.

In some embodiments, the carbon nanotubes may be present in an amount of about 2.2 parts by weight to about 3.8 parts by weight, for example, about 2.5 parts by weight to about 3.5 parts by weight, relative to about 100 parts by weight of the polyolefin resin. If the content of the carbon nanotubes is less than about 2.2 parts by weight relative to about 100 parts by weight of the polyolefin resin, the expanded particles (molded product) can suffer from deterioration in electrical conductivity and uniformity of electrical conductivity, and if the content of the carbon nanotubes exceeds about 3.8 parts by weight, the expanded particles (molded product) can suffer from deterioration in fusibility (molding processability) and the like.

(C) Carbon black

According to the present invention, carbon black is used together with the carbon nanotubes to improve electrical conductivity, fusibility and the like of the polyolefin-based expanded particles through formation of a uniform electrical path even with a small amount thereof. The carbon black may have a surface area of about 700 $m^2$/g to about 1,100 $m^2$/g, for example, about 800 $m^2$/g to about 1,000 $m^2$/g, as measured in accordance with ASTM D6556, and a DBP oil absorption amount of about 350 $cm^3$/100 g to about 450 $cm^3$/100 g, for example, about 360 $cm^3$/100 g to about 420 $cm^3$/100 g, as measured in accordance with ASTM D2414. If the surface area of the carbon black is not within the above range, the expanded particles (molded product) can suffer from deterioration in electrical conductivity and uniformity in conduction performance, and if the DBP oil absorption amount of the carbon black is not within the above range, the expanded particles (molded product) can suffer from deterioration in electrical conductivity and uniformity in conduction performance.

In some embodiments, the carbon black may be present in an amount of about 4 parts by weight to about 11 parts by weight, for example, about 5 parts by weight to about 10 parts by weight, relative to about 100 parts by weight of the polyolefin resin. If the content of the carbon black is less than about 4 parts by weight relative to about 100 parts by weight of the polyolefin resin, the expanded particles (molded product) can suffer from deterioration in electrical conductivity and uniformity in conduction performance, and if the content of the carbon black exceeds about 11 parts by weight, the expanded particles (molded product) can suffer from deterioration in fusibility (molding processability) and the like.

In some embodiments, the carbon nanotubes (B) and the carbon black (C) may be present in a weight ratio (B:C) of about 1: 1.5 to about 1:5, for example, about 1:1.6 to about 1:3.5. Within this range, the expanded particles (molded product) can exhibit good properties in terms of electrical conductivity, uniformity in conduction performance, fusibility, and the like.

According to one embodiment of the invention, the polyolefin-based expanded particles may have an expansion ratio of about 10 times to about 40 times, for example, about 10 times to about 35 times, and expanded cells of the expanded particles may have an average particle diameter of about 30 $\mu$m to about 400 $\mu$m, for example, about 50 $\mu$m to about 300 $\mu$m. Within this range, the expanded particles (molded product) can exhibit good properties in terms of electrical conductivity, uniformity in conduction performance, fusibility, and the like. Here, the expansion ratio of the expanded particles is a conversion value obtained by measuring the weight and volume of the dried expanded particles using a graduated cylinder and a scale to calculate the density of the expanded particles, followed by conversion of the calculated density into a ratio with respect to a density of 0.9 g/$cm^3$ of the resin composition particles before expansion, which is set as 1 time. The average particle diameter of the expanded cells is a value obtained by cooling the expanded particles with liquid nitrogen to cut the expanded particles in a cross section, measuring three or more particle diameters of the expanded particles using a scanning electron microscope (SEM), and calculating an average value.

According to one embodiment of the invention, the polyolefin-based expanded particles (polyolefin resin composition) may further comprise additives for typical expansible resin compositions, as needed, within the range not causing deterioration in the objects and advantageous effects of the present invention. The additives may comprise an antioxidant, a light stabilizer, a heat stabilizer, a flame retardant, a colorant, a plasticizer, a slip agent, an antistatic agent, and combinations thereof, without being limited thereto. The additives may be present in an amount of about 0.001 parts by weight to about 40 parts by weight, for example, about 0.1 parts by weight to about 15 parts by weight, relative to about 100 parts by weight of the polyolefin resin.

The polyolefin-based expanded particles according to the present invention may be produced by a method of preparing expanded particles, which is well-known in the art. For example, the method may comprise: mixing a polyolefin resin composition comprising the polyolefin resin, carbon nanotubes, and carbon black with a dispersion medium comprising water and a dispersant to prepare a mixture; and adding a blowing agent to the mixture, followed by expanding the mixture such that the expanded particles have an expansion ratio of about 10 times to about 40 times and expanded cells of the expanded particles have an average particle diameter of about 30 $\mu$m to about 400 $\mu$m.

In some embodiments, the dispersant may comprise at least one of higher fatty acids, higher fatty acid esters, and higher fatty acid amides.

In some embodiments, the polyolefin resin composition may be prepared by mixing the above components, followed by melt extrusion of the mixture in the form of pellets, beads, or the like using a typical twin-screw extruder at about 150°C to about 240°C, for example, about 160°C to about 230°C.

In some embodiments, the polyolefin resin composition may be supplied to a reactor in which the dispersion medium is present, or may be supplied together with the dispersion medium to a reactor to form the mixture.

In some embodiments, the blowing agent may be blowing agents used for typical expanded particles. For example, the blowing agent may be at least one of carbon dioxide, propane, butane, hexane, pentane, heptane, cyclobutane, cyclohexane, methyl chloride, ethyl chloride, methylene chloride, dimethyl ether, diethyl ether, methyl ethyl ether, nitrogen, argon, and mixtures thereof.

In some embodiments, expansion of the mixture may be performed by heating and pressing the mixture containing the blowing agent at a temperature of about 130°C to about 160°C, for example, about 135°C to about 155°C under a pressure of about 20 kgf/cm$^2$ to about 50 kgf/cm$^2$, for example, about 35 kgf/cm$^2$ to about 45 kgf/cm$^2$, followed by exposing the mixture to room temperature and atmospheric pressure. Under the above temperature and pressure conditions, the method can provide expanded particles that have an expansion ratio of about 10 times to about 40 times and comprise expanded cells having an average diameter of about 30 $\mu$m to about 400 $\mu$m.

A molded product (expanded article) according to one embodiment of the invention may be easily produced from the polyolefin-based expanded particles by a person having ordinary knowledge in the art. For example, the molded product may be produced by filling a mold with the polyolefin-based expanded particles, followed by bonding the expanded particles to one another through fusion.

In some embodiments, the molded product may be produced by filling a nonairtight mold with the polyolefin-based expanded particles, supplying saturation steam (for example, saturation steam having a pressure of about 2.0 bar to about 3.5 bar) to the mold for about 30 seconds, and bonding the expanded particles to one another through fusion, followed by drying the expanded particles.

In some embodiments, the molded product may have a surface resistance value of about 10 to about 10$^{3.1}$ $\Omega$/sq, for example, about 10 to about 10$^3$ $\Omega$/sq, as measured by a surface resistance tester (SIMCO, ST-4).

In some embodiments, the molded product may have a surface resistance deviation of about 10$^{0.5}$ $\Omega$/sq or less, for example, about 10$^{0.1}$ S2/sq to about 10$^{0.4}$ $\Omega$/sq, as calculated by Equation 1.

[Equation 1]

$$\text{Surface resistance deviation} = \left| \text{surface resistance}_{(1, 2, 3, 4 \text{ or } 5)} - \text{average surface resistance} \right|$$

In Equation 1, surface resistance $_{(1, 2, 3, 4 \text{ or } 5)}$ is measured using a surface resistance tester (SIMCO, ST-4). The surface resistance $_{(1, 2, 3, 4 \text{ or } 5)}$ is one of five surface resistance values measured in 5 different regions on the molded product by a surface resistance tester (SIMCO, ST-4) and the average surface resistance is an average of the five surface resistance values.

The molded product (expanded article) according to the present invention has a low surface resistance of about $10^{3.1}$ $\Omega$/sq or less, which indicates good electrical conductivity, a low surface resistance deviation of about $10^{0.5}$ $\Omega$/sq or less, which indicates uniform electrical conductivity (conduction performance), and good fusibility to be advantageously used as packaging materials, building materials, materials for automobile parts, and the like.

[Mode for Invention]

Next, the present invention will be described in more detail with reference to some examples. It should be understood that these examples are provided for illustration only and are not to be construed in any way as limiting the invention.

**EXAMPLE**

Details of components used in Examples and Comparative Examples are as follows.

(A) Polyolefin resin

A propylene-ethylene random copolymer (Manufacturer: Lotte Chemical Co., Ltd., Product Name: SEP-550, Random-PP) was used.

(B) Carbon nanotubes

Carbon nanotubes (Manufacturer: LG Chemical Co., Ltd., Product Name: BT3, average diameter: 10 nm, average length: 14 $\mu$m, surface area: 250 $m^2$/g or more) was used.

(C) Carbon black

(C1) Carbon black (Manufacturer: Unipetrol Co., Ltd., Product Name: CHEZ AC ARB, surface area: 800 $m^2$/g or more, DBP oil absorption amount: 380 $cm^3$/100 g or more) was used.

(C2) Carbon black (Manufacturer: Orion Co., Ltd., Product Name: HIBLACK®20L, surface area: 88 $m^2$/g, DBP oil absorption amount: 153 $cm^3$/100 g) was used.

(C3) Carbon black (Manufacturer: Orion Co., Ltd., Product Name: 420B, surface area: 30 to 50 $m^2$/g, DBP oil absorption amount: 60 to 80 $cm^3$/100 g) was used.

**Examples 1 to 5 and Comparative Examples 1 to 6**

The above components were added in amounts as listed in Table 1 to prepare a mixture, which in turn was subjected to extrusion at 210°C, thereby preparing a polypropylene resin composition in the form of pellets (1 mg to 1.2 mg, $\Phi$ 0.7 mm $\times$ 1 mm). Extrusion was performed using a twin-axis extruder (L/D=44, $\Phi$39.8 mm) (screw rpm: 360 rpm).

Next, 100 parts by weight of the polypropylene resin composition was placed together with 300 parts by weight of a dispersion medium (water containing a dispersant) in an autoclave. As a blowing agent, carbon dioxide ($CO_2$) was added to the autoclave, followed by heating the autoclave while stirring the mixture to have an inner temperature of 147°C and a pressure of 40 kgf/$cm^2$. Next, the mixture in the autoclave was exposed to atmosphere, thereby preparing expanded particles having an expansion ratio of 30 times and comprising expanded cells having an average diameter of 150 $\mu$m. The expanded particles were dried in an oven at 60°C for 24 hours and left at room temperature under atmospheric pressure for 48 hours, followed by filling a mold (450 mm $\times$ 450 mm $\times$ 50 mm) with the expanded particles. Next, saturation steam (stationary axis: 2.7 bar, 7 sec, movable axis: 2.9 bar, 7 sec, both stationary axis and movable axis at the same time: 3.1 bar and 10 sec) was supplied to the mold by a steam chest molding method to form a product through fusion bonding between the expanded particles, followed by drying the product in an oven at 60°C for 24 hours, thereby producing a molded product. Properties of the molded product were evaluated by the following method and results are shown in Tables 2, 3, 4 and 5.

Property Evaluation

(1) Surface resistance (unit: $\Omega$/sq): Surface resistance of each of the molded products prepared in Examples and Comparative Examples was measured (measurement mode: measurement of resistance between ground terminals, measurement time: 15 sec, measurement voltage: 10V/10mA max) using a surface resistance tester (Manufacturer: SIMCO, Product Name: ST-4, measurement conditions: 15°C to 25°C, 60% RH or less).

(2) Surface resistance deviation (unit: Ω/sq): Surface resistance deviation was calculated according to the following Equation 1:

[Equation 1]

$$\text{Surface resistance deviation} = \left| \text{surface resistance}_{(1, 2, 3, 4 \text{ or } 5)} - \text{average surface resistance} \right|$$

In Equation 1, surface resistance $_{(1, 2, 3, 4 \text{ or } 5)}$ was measured using a surface resistance tester (Manufacturer: SIMCO, Product Name: ST-4) as described above. Surface resistance $_{(1, 2, 3, 4 \text{ or } 5)}$ is one of five surface resistance values measured in 5 different regions on the molded product and the average surface resistance is an average of the five surface resistance values.

Here, a lower surface resistance deviation indicates more uniform surface resistance in each region.

(3) Fusibility: Each of rectangular molded products (450 mm × 450 mm × 50 mm) prepared in Examples and Comparative Examples was broken by bending the molded product along the center thereof (at a point of 200 mm to 250 mm), with both ends of the molded product secured, followed by photographing a broken crosssection of the molded product using a microscope (OLYMPUS, SZH10, X1.5) to evaluate fusibility of the molded product. Specifically, in observation of the broken surface of each of the molded products, a cracked or split form indicates good fusibility and an exposed surface indicates poor fusibility.

Table 1

|  | Example | | | | |
|---|---|---|---|---|---|
|  | 1 | 2 | 3 | 4 | 5 |
| (A) (parts by weight) | 100 | 100 | 100 | 100 | 100 |
| (B) (parts by weight) | 2.5 | 3 | 3.5 | 3 | 3 |
| (C1) (parts by weight) | 8 | 8 | 8 | 5 | 10 |
| (C2) (parts by weight) | - | - | - | - | - |
| (C3) (parts by weight) | - | - | - | - | - |
| Surface resistance (Ω/sq) | $10^3$ | $10^{2.7}$ | $10^{2.4}$ | $10^{2.8}$ | $10^{2.5}$ |
| Surface resistance deviation (Ω/sq) | $10^{0.3}$ | $10^{0.2}$ | $10^{0.2}$ | $10^{0.3}$ | $10^{0.2}$ |
| Fusibility | Good | Good | Good | Good | Good |

Table 2

|  | Comparative Example | | | | | |
|---|---|---|---|---|---|---|
|  | 1 | 2 | 3 | 4 | 5 | 6 |
| (A) (parts by weight) | 100 | 100 | 100 | 100 | 100 | 100 |
| (B) (parts by weight) | 2 | 4 | 3 | 3 | 3 | 3 |
| (C1) (parts by weight) | 8 | 8 | 3 | 13 | - | - |
| (C2) (parts by weight) | - | - | - | - | 8 | - |
| (C3) (parts by weight) | - | - | - | - | - | 8 |
| Surface resistance (Ω/sq) | $10^{4.0}$ | $10^{2.3}$ | $10^{3.2}$ | $10^{2.1}$ | $10^{3.3}$ | $10^{3.6}$ |
| Surface resistance deviation (Ω/sq) | $10^{0.4}$ | $10^{0.2}$ | $10^{0.8}$ | $10^{0.2}$ | $10^{0.7}$ | $10^{0.7}$ |

(continued)

| | Comparative Example | | | | | |
|---|---|---|---|---|---|---|
| | 1 | 2 | 3 | 4 | 5 | 6 |
| Fusibility | Good | Poor | Good | Poor | Good | Good |

From the above result, it could be seen that the molded products produced from the polyolefin-based expanded particles according to the present invention exhibited good electrical conductivity and good fusibility and had a low surface resistance deviation indicating uniform conduction performance. Conversely, it could be seen that the molded product of Comparative Example 1 prepared using an insufficient amount of carbon nanotubes suffered from deterioration in electrical conductivity and the like, and the molded product of Comparative Example 2 prepared using an excess of carbon nanotubes suffered from deterioration in fusibility and the like. In addition, it could be seen that the molded product of Comparative Example 3 prepared using an insufficient amount of carbon black suffered from deterioration in electrical conductivity and uniformity in conduction performance, the molded product of Comparative Example 4 prepared using an excess of carbon black suffered from deterioration in fusibility and the like, the molded products of Comparative Example 5 prepared using carbon black (C2) having a surface area and containing a DBP oil absorption amount not within the ranges of the present invention, instead of carbon black (C1) according to the present invention, suffered from deterioration in electrical conductivity and uniformity in conduction performance, and the molded products of Comparative Example 6 prepared using carbon black (C3) having a surface area and containing a DBP oil absorption amount not within the ranges of the present invention, instead of carbon black (C1) according to the present invention, suffered from deterioration in electrical conductivity and uniformity in conduction performance.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the present invention should be interpreted according to the following appended claims as covering all modifications or variations derived from the appended claims and equivalents thereto.

**Claims**

1.    Polyolefin-based expanded particles being expanded particles of a polyolefin resin composition comprising:

   about 100 parts by weight of a polyolefin resin;
   about 2.2 parts by weight to about 3.8 parts by weight of carbon nanotubes; and
   about 4 parts by weight to about 11 parts by weight of carbon black having a surface area of about 700 $m^2$/g to about 1,100 $m^2$/g and a DBP oil absorption amount of about 350 $cm^3$/100 g to about 450 $cm^3$/100 g,
   wherein the expanded particles have an expansion ratio of about 10 times to about 40 times and expanded cells of the expanded particles have an average particle diameter of about 30 $\mu$m to about 400 $\mu$m.

2.    The polyolefin-based expanded particles according to claim 1, wherein the carbon nanotubes and the carbon black are present in a weight ratio of about 1: 1.5 to about 1:5.

3.    The polyolefin-based expanded particles according to claim 1, wherein the polyolefin resin comprises at least one of polypropylene; a random copolymer obtained by polymerizing at least two monomers of propylene, ethylene, butylene and octene; a block copolymer in which polypropylene is blended with ethylene-propylene rubbers; polyethylene; an ethylene-vinyl acetate copolymer; and a copolymer of $\alpha$-olefins.

4.    The polyolefin-based expanded particles according to claim 1, wherein the carbon nanotubes have an average diameter of about 3 nm to about 15 nm, an average length of about 10 $\mu$m to about 25 $\mu$m, and a surface area of about 150 $m^2$/g to about 300 $m^2$/g.

5.    A method of preparing polyolefin-based expanded particles, comprising:

   mixing about 100 parts by weight of a polyolefin resin composition comprising a polyolefin resin, carbon nanotubes, and carbon black having a surface area of about 700 $m^2$/g to about 1,100 $m^2$/g and a DBP oil absorption amount of about 350 cm$^3$/100 g to about 450 cm$^3$/100 g with about 200 parts by weight to about 400 parts by weight of a dispersion medium comprising water and a dispersant to prepare a mixture; and

adding a blowing agent to the mixture, followed by expanding the mixture such that the expanded particles have an expansion ratio of about 10 times to about 40 times and expanded cells of the expanded particles have an average particle diameter of about 30 $\mu$m to about 400 $\mu$m.

6. The method according to claim 5, wherein the dispersant comprises at least one of higher fatty acids, higher fatty acid esters, and higher fatty acid amides.

7. The method according to claim 5, wherein expansion of the mixture is performed by heating and compressing the mixture containing the blowing agent to a temperature of about 130°C to about 160°C and a pressure of about 20 kgf/cm$^2$ to about 50 kgf/cm$^2$, followed by exposing the mixture to room temperature and atmospheric pressure.

8. A molded product formed of the polyolefin-based expanded particles according to any one of claims 1 to 4.

9. The molded product according to claim 8, wherein the molded product is formed by filling a mold with the polyolefin-based expanded particles, followed by bonding the expanded particles to one another through fusion.

10. The molded product according to claim 8, wherein the molded product has a surface resistance value of about 10 S2/sq to about 10$^{3.1}$ $\Omega$/sq, as measured by a surface resistance tester.

11. The molded product according to claim 8, wherein the molded product has a surface resistance deviation of about 10$^{0.5}$ $\Omega$/sq or less, as calculated by Equation 1:

[Equation 1]

$$\text{Surface resistance deviation} = \left| \text{surface resistance}_{(1,\,2,\,3,\,4\text{ or }5)} - \text{average surface resistance} \right|$$

where surface resistance$_{(1, 2, 3, 4\text{ or }5)}$ is one of five surface resistance values measured in 5 different regions on the molded product by a surface resistance tester (SIMCO, ST-4) and the average surface resistance is an average of the five surface resistance values.

**EP 4 206 265 A1**

<table>
<tr><td colspan="2">INTERNATIONAL SEARCH REPORT</td><td>International application No.<br>**PCT/KR2021/011238**</td></tr>
</table>

| A. | CLASSIFICATION OF SUBJECT MATTER |
|---|---|

**C08J 9/16**(2006.01)i; **C08J 9/00**(2006.01)i; **C08J 9/224**(2006.01)i; **C08K 3/04**(2006.01)i; **C08L 23/00**(2006.01)i

According to International Patent Classification (IPC) or to both national classification and IPC

| B. | FIELDS SEARCHED |
|---|---|

Minimum documentation searched (classification system followed by classification symbols)

C08J 9/16(2006.01); C08J 5/00(2006.01); C08J 9/04(2006.01); C08J 9/24(2006.01); C08K 3/00(2006.01); C08K 3/04(2006.01); C08L 23/10(2006.01); C08L 31/04(2006.01); C08L 59/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리올레핀 수지(polyolefin resin), 발포 입자(foam particle), 탄소나노튜브(carbon nanotube), 카본블랙(carbon black)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 6200809 B2 (KANEKA CORPORATION) 20 September 2017 (2017-09-20)<br>See claims 1-15; paragraphs [0029]-[0145]; and table 1. | 1-11 |
| Y | KR 10-2010-0136079 A (HANWHA CHEMICAL CORPORATION) 28 December 2010 (2010-12-28)<br>See claims 1 and 6; paragraphs [0047]-[0048]; and manufacturing example 1. | 1-11 |
| A | JP 07-300536 A (JSP CORP.) 14 November 1995 (1995-11-14)<br>See entire document. | 1-11 |
| A | KR 10-2012-0021697 A (YOUNGBO CHEMICAL CO., LTD.) 09 March 2012 (2012-03-09)<br>See entire document. | 1-11 |
| A | KR 10-2009-0085481 A (KOREA ENGINEERING PLASTICS CO., LTD.) 07 August 2009 (2009-08-07)<br>See entire document. | 1-11 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 December 2021** | **01 December 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/011238**

| Patent document cited in search report | | | Publication date (day/month/year) | Patent family member(s) | | | Publication date (day/month/year) |
|---|---|---|---|---|---|---|---|
| JP | 6200809 | B2 | 20 September 2017 | CN | 104024315 | A | 03 September 2014 |
| | | | | CN | 104024315 | B | 30 March 2016 |
| | | | | EP | 2796489 | A1 | 29 October 2014 |
| | | | | EP | 2796489 | A4 | 09 September 2015 |
| | | | | EP | 2796489 | B1 | 05 August 2020 |
| | | | | MY | 167873 | A | 26 September 2018 |
| | | | | US | 2014-0346411 | A1 | 27 November 2014 |
| | | | | WO | 2013-094529 | A1 | 27 June 2013 |
| KR | 10-2010-0136079 | A | 28 December 2010 | KR | 10-1090729 | B1 | 08 December 2011 |
| | | | | KR | 10-1594494 | B1 | 16 February 2016 |
| | | | | KR | 10-2010-0058342 | A | 03 June 2010 |
| | | | | TW | 201035996 | A | 01 October 2010 |
| | | | | TW | I406301 | B | 21 August 2013 |
| | | | | WO | 2010-059008 | A2 | 27 May 2010 |
| | | | | WO | 2010-059008 | A3 | 05 August 2010 |
| JP | 07-300536 | A | 14 November 1995 | JP | 3525947 | B2 | 10 May 2004 |
| KR | 10-2012-0021697 | A | 09 March 2012 | KR | 10-1135429 | B1 | 13 April 2012 |
| KR | 10-2009-0085481 | A | 07 August 2009 | KR | 10-0937626 | B1 | 22 January 2010 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 102005256007 A
- KR 1020090086336